(19) Europäisches Patentamt
European Patent Office
Office européen des brevets

(11) EP 1 427 517 B1

(12) **EUROPÄISCHE PATENTSCHRIFT**

(45) Veröffentlichungstag und Bekanntmachung des Hinweises auf die Patenterteilung:
**26.01.2005 Patentblatt 2005/04**

(21) Anmeldenummer: **02764864.1**

(22) Anmeldetag: **29.08.2002**

(51) Int Cl.[7]: **B01D 71/62**, H01M 8/10, B01D 67/00

(86) Internationale Anmeldenummer:
**PCT/EP2002/009629**

(87) Internationale Veröffentlichungsnummer:
**WO 2003/022412 (20.03.2003 Gazette 2003/12)**

(54) **PROTONLEITENDE MEMBRAN UND BESCHICHTUNG**

PROTON-CONDUCTING MEMBRANE AND COATING

MEMBRANE ET COUCHE CONDUCTRICE DE PROTONS

(84) Benannte Vertragsstaaten:
**AT BE BG CH CY CZ DE DK EE ES FI FR GB GR IE IT LI LU MC NL PT SE SK TR**

(30) Priorität: **12.09.2001 DE 10144815**

(43) Veröffentlichungstag der Anmeldung:
**16.06.2004 Patentblatt 2004/25**

(73) Patentinhaber: **Pemeas GmbH**
**65926 Frankfurt am Main (DE)**

(72) Erfinder:
- **CALUNDANN, Gordon**
  **North Plainfield, NJ 07060 (US)**
- **SANSONE, Michael, J.**
  **Berkeley Heights, NJ 07927 (US)**
- **UENSAL, Oemer**
  **55128 Mainz (DE)**
- **KIEFER, Joachim**
  **66679 Losheim am See (DE)**

(74) Vertreter: **Luderschmidt, Schüler & Partner GbR**
**Patentanwälte**
**Industriepark Höchst,**
**Gebäude F 821**
**65926 Frankfurt (DE)**

(56) Entgegenhaltungen:
**WO-A-00/39202**
**WO-A-00/44816**
**WO-A-01/94450**
**WO-A-02/071518**
**US-A- 5 525 436**
**US-A- 5 945 233**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft eine neuartige protonenleitende Polymermembran auf Basis von Polyazolen, die eine Konzentration von Phosphorsäure ausgedrückt als Mol Säure pro Mol Wiederholungseinheit des Polymers zwischen 12 und 20 aufweist und die aufgrund ihrer hervorragenden chemischen und thermischen Eigenschaften vielfältig eingesetzt werden kann und sich insbesondere als Polymer-Elektrolyt-Membran (PEM) in sogenannten PEM-Brennstoffzellen eignet.

Polyazole wie beispielsweise Polybenzimidazole (®Celazole) sind seit langem bekannt. Die Herstellung derartiger Polybenzimidazole (PBI) erfolgt üblicherweise durch Umsetzung von 3,3',4,4'-Tetraaminobiphenyl mit Isophthalsäure oder Diphenyl-isophthalsäure bzw. deren Estem in einer Festphasen-Polymerisation. Das enstehende Präpolymer erstarrt im Reaktor und wird anschließend mechanisch zerkleinert. Anschließend wird das pulverförmige Präpolymer bei Temperaturen von bis zu 400°C endpolymerisiert und das gewünschte Polybenzimidazole erhalten.

Zur Herstellung von Polymerfolien wird das PBI in polaren, aprotischen Lösemitteln wie beispielsweise Dimethylacetamid (DMAc) gelöst und eine Folie mittels klassischer Verfahren erzeugt.

Protonenleitende, d.h. mit Säure dotierte Polyazol-Membranen für den Einsatz in PEM-Brennstoffzellen sind bereits bekannt. Die basischen Polyazol-Folien werden mit konzentrierter Phosphorsäure oder Schwefelsäure dotiert und wirken dann als Protonenleiter und Separatoren in sogenannten Polymerelektrolyt-Membran-Brennstoffzellen (PEM-Brennstoffzellen).

Das Dokument WO-0039202-A offenbart eine protonenleitenden Membran erhalten aus der Behandlung von Polybenzimidazol (PBI) mit 85 %iger Phosphorsäure mit einem Dotierungsgrad Phosphorsäuregruppen/ PBI-Gruppe bis ca. 10.

Das Dokument US-5945233-A offenbart Elektroden und Membran-Elektroden-Einheiten für Brennstoffzellen beschichtet mit einem Polymer auf Basis von Polyazolen erhältlich durch:

A) Lösen von PBI in 85%iger Phosphorsäure,
B) Erwärmen auf 100-150°C,
C) Aufgetragen auf eine Elektrode (Schichtdicke z.B. 25 µm),
D) Behandlung der Schicht.

Bedingt durch die hervorragenden Eigenschaften des Polyazol-Polymeren können derartige Polymerelektrolytmembranen - zu Membran-Elektroden-Einheiten (MEE) verarbeitet - bei Dauerbetriebstemperaturen oberhalb 100°C insbesondere oberhalb 120°C in Brennstoffzellen eingesetzt werden. Diese hohe Dauerbetriebstemperatur erlaubt es die Aktivität der in der Membran-Elektroden-Einheit (MEE) enthaltenen Katalysatoren auf Edelmetallbasis zu erhöhen. Insbesondere bei der Verwendung von sogenannten Reformaten aus Kohlenwasserstoffen sind im Reformergas deutliche Mengen an Kohlenmonoxid enthalten, die üblicherweise durch eine aufwendige Gasaufbereitung bzw. Gasreinigung entfernt werden müssen. Durch die Möglichkeit die Betriebstemperatur zu erhöhen, können deutlich höhere Konzentrationen an CO-Verunreinigungen dauerhaft toleriert werden.

Durch Einsatz von Polymer-Elektrolyt-Membranen auf Basis von Polyazol-Polymeren kann zum einen auf die aufwendige Gasaufbereitung bzw. Gasreinigung teilweise verzichtet werden und andererseits die Katalysatorbeladung in der Membran-Elektroden-Einheit reduziert werden. Beides ist für einen Masseneinsatz von PEM-Brennstoffzellen unabdingbare Voraussetzung, da ansonsten die Kosten für ein PEM-Brennstoffzellen-System zu hoch sind.

Die bislang bekannten mit Säure dotierten Polymermembrane auf Basis von Polyazolen zeigen bereits ein günstiges Eigenschaftsprofil. Aufgrund der für PEM-Brennstoffzellen angestrebten Anwendungen, insbesondere im Automobilbereich- und der dezentralen Strom- und Wärmeerzeugung (Stationärbereich), sind diese insgesamt jedoch noch zu verbessern. Darüber hinaus haben die bislang bekannten Polymermembranen einen hohen Gehalt an Dimethylacetamid (DMAc), der mittels bekannter Trocknungsmethoden nicht vollständig entfernt werden kann. In der DE-10109829 wird eine Polymermembran auf Basis von Polyazolen beschrieben, bei der die DMAc-Kontamination beseitigt wurde. Derartige Polymermembran zeigen zwar verbesserte mechanische Eigenschaften, hinsichtlich der spezifischen Leitfähigkeit werden jedoch 0,1 S/cm (bei 120°C) nicht überschritten.

Aufgabe der vorliegenden Erfindung ist mit Säure dotierte Polymermembranen auf Basis von Polyazolen bereitzustellen, die einerseits die anwendungstechnischen Vorteile der Polymermembran auf Basis von Polyazolen aufweisen und andererseits eine gesteigerte spezifische Leitfähigkeit, insbesondere bei Betriebstemperaturen oberhalb von 100°C, aufweisen und zusätzliche ohne Brenngasbefeuchtung auskommen.

Wir haben nun gefunden, daß eine protonenleitende Membran auf Basis von Polyazolen erhalten werden kann, wenn das kommerziell erhältliche Polyazol-Polymere in Polyphosphorsäure gelöst zur Herstellung der Membran eingesetzt wird. Bei dieser neuen Membran kann auf die in der DE-10109829 beschriebe spezielle Nachbehandlung verzichtet werden. Die dotierten Polymermembranen zeigen eine signifikant verbesserte Protonenleitfähigkeit, das nachträgliche dotieren der Folie entfällt.

Gegenstand der vorliegenden Erfindung ist eine protonenleitende Polymermembran auf Basis von Polyazolen die eine Konzentration vor Phosphorsäure ausgedrückt als Mol Säure pro Mol Wiederholungseinheit des Polymers zwischen 12 und 20 aufweist und erhältlich durch ein Verfahren umfassend die Schritte

A) Lösen des Polyazol-Polymeren in Polyphosphorsäure,
B) Erwärmen der Lösung erhältlich gemäß Schritt A) unter Inertgas auf Temperaturen von bis zu 400°C, vorzugsweise bis zu 350°C, insbesondere von bis zu 300°C,
C) Bilden einer Membran unter Verwendung der Lösung des Polyazol-Polymeren gemäß Schritt B) auf einem Träger und
D) Behandlung der in Schritt C) gebildeten Membran bis diese selbsttragend ist.

Die in Schritt A) eingesetzten Polymere auf Basis von Polyazol enthalten wiederkehrende Azoleinheiten der allgemeinen Formel (I) und/oder (II)

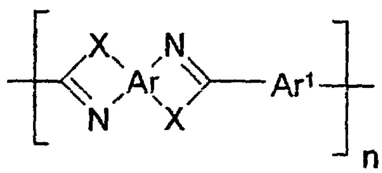
(I)

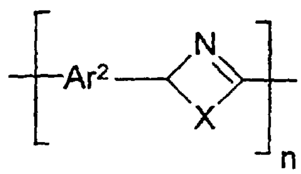
(II)

worin

- Ar gleich oder verschieden sind und für eine vierbindige aromatische oder heteroaromatische Gruppe, die ein- oder mehrkemig sein kann,
- $Ar^1$ gleich oder verschieden sind und für eine zweibindige aromatische oder heteroaromatische Gruppe, die ein- oder mehrkemig sein kann,
- $Ar^2$ gleich oder verschieden sind und für eine zwei oder dreibindige aromatische oder heteroaromatische Gruppe, die ein- oder mehrkemig sein kann,
- X gleich oder verschieden ist und für Sauerstoff, Schwefel oder eine Aminogruppe, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt

Bevorzugte aromatische oder heteroaromatische Gruppen leiten sich von Benzol, Naphthalin, Biphenyl, Diphenylether, Diphenylmethan, Diphenyldimethylmethan, Bisphenon, Diphenylsulfon, Chinolin, Pyridin, Bipyridin, Anthracen und Phenanthren, die gegebenenfalls auch substituiert sein können, ab.
Dabei ist das Substitionsmuster von $Ar^1$ beliebig, im Falle vom Phenylen beispielsweise kann $Ar^1$ ortho-, meta- und para-Phenylen sein. Besonders bevorzugte Gruppen leiten sich von Benzol und Biphenylen, die gegebenenfalls auch substituiert sein können, ab.
Bevorzugte Alkylgruppen sind kurzkettige Alkylgruppen mit 1 bis 4 Kohlenstoffatomen, wie z. B. Methyl-, Ethyl-, n- oder i-Propyl- und t-Butyl-Gruppen.
Bevorzugte aromatische Gruppen sind Phenyl- oder Naphthyl-Gruppen. Die Alkylgruppen und die aromatischen Gruppen können substituiert sein.
Bevorzugte Substituenten sind Halogenatome wie z. B. Fluor, Aminogruppen oder kurzkettige Alkylgruppen wie z. B. Methyl- oder Ethylgruppen.
Bevorzugt sind Polyazole mit wiederkehrenden Einheiten der Formel (I) bei denen die Reste X innerhalb einer wiederkehrenden Einheit gleich sind.
Die Polyazole können grundsätzlich auch unterschiedliche wiederkehrende Einheiten aufweisen, die sich beispielsweise in ihrem Rest X unterscheiden. Vorzugsweise jedoch weist es nur gleiche Reste X in einer wiederkehrenden Einheit auf.

In einer weiteren Ausführungsform der vorliegenden Erfindung ist das Polymer enthaltend wiederkehrende Azoleinheiten ein Copolymer, das mindestens zwei Einheiten der Formel (I) und/oder (II) enthält, die sich voneinander unterscheiden. Die Polymere können als Blockcopolymere (Diblock, Triblock), statistische Copolymere, periodische Copolymere und/oder alternierende Polymere vorliegen.

In einer besonders bevorzugten Ausführungsform der vorliegenden Erfindung ist das Polymer enthaltend wiederkehrende Azoleinheiten ein Polyazol, das nur Einheiten der Formel (I) und/oder (II) enthält.

Die Anzahl der wiederkehrende Azoleinheiten im Polymer ist vorzugsweise eine ganze Zahl größer gleich 10. Besonders bevorzugte Polymere enthalten mindestens 100 wiederkehrende Azoleinheiten.

Im Rahmen der vorliegenden Erfindung sind Polymere enthaltend wiederkehrenden Benzimidazoleinheiten bevorzugt. Einige Beispiele der äußerst zweckmäßigen Polymere enthaltend ein oder mehrere wiederkehrende Benzimidazoleinheiten werden durch die nachfolgende Formeln wiedergegeben:

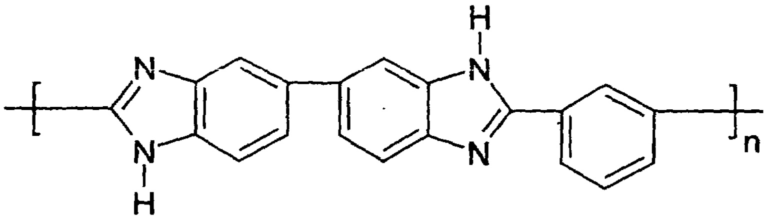

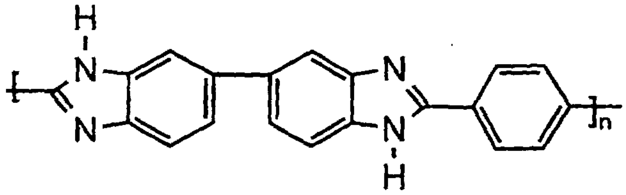

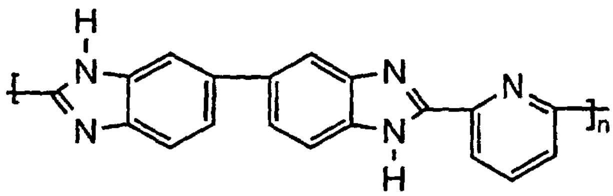

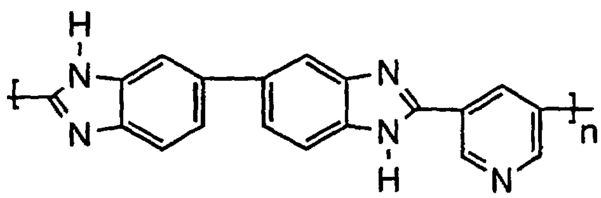

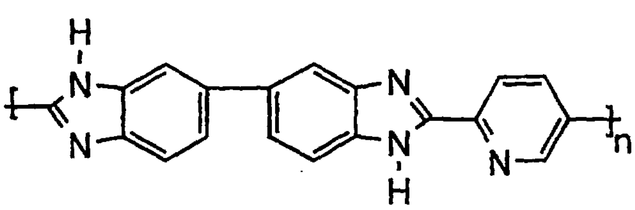

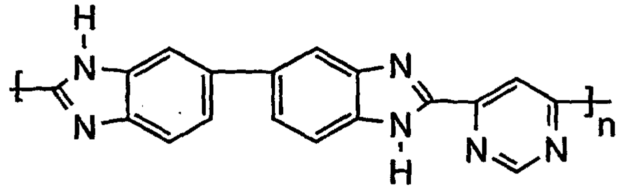

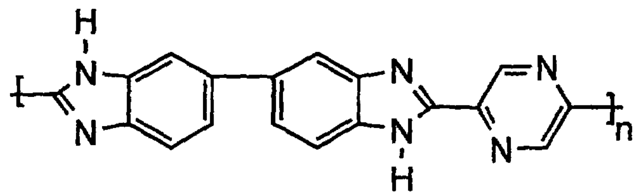

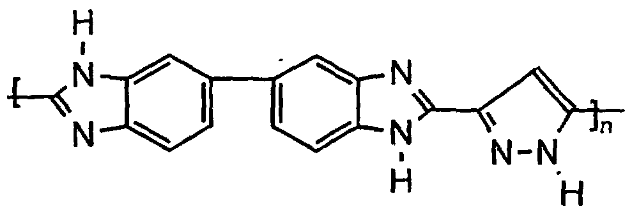

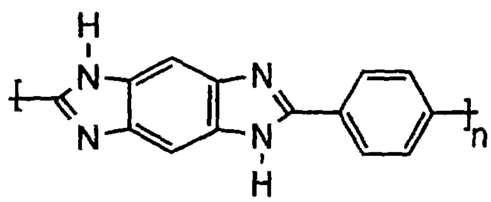

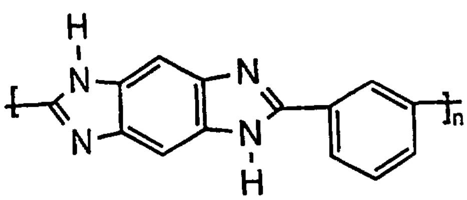

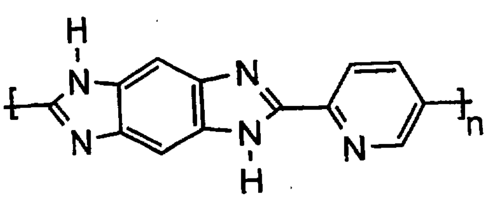

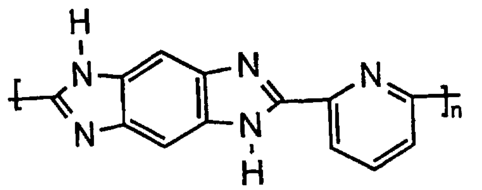

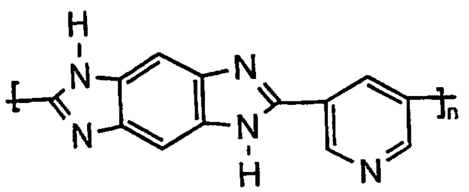

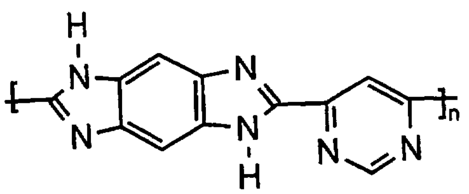

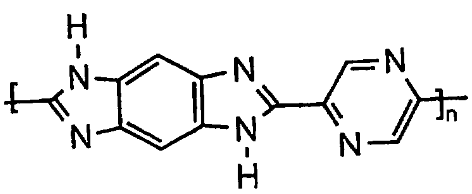

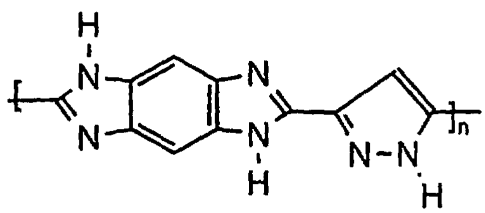

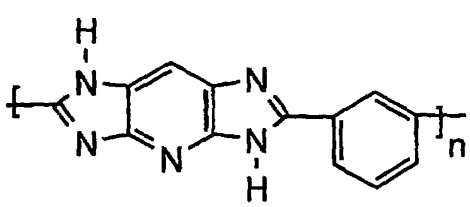

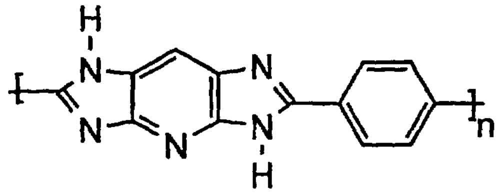

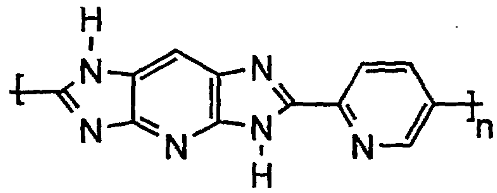

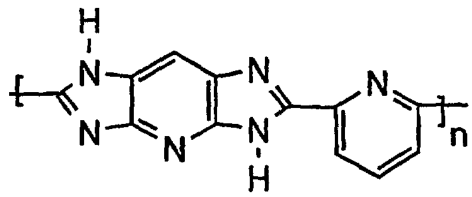

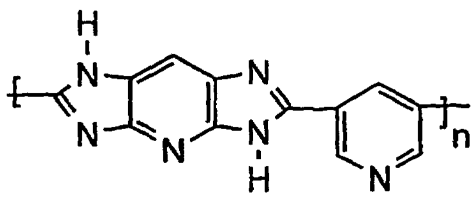

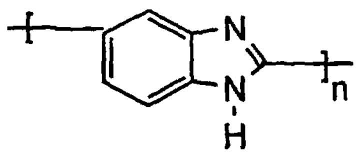

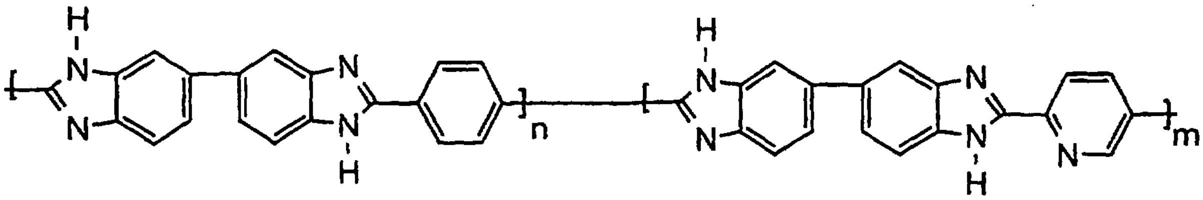

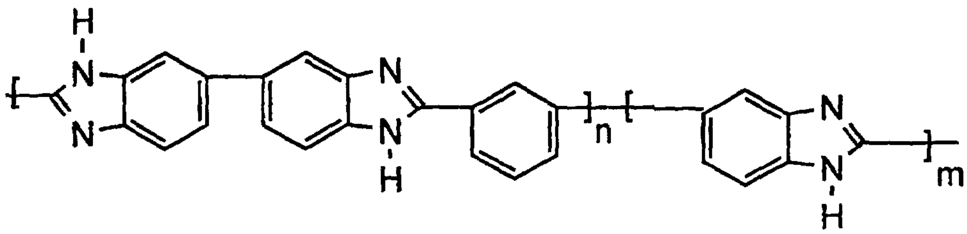

wobei n und m eine ganze Zahl größer gleich 10, vorzugsweise größer gleich 100 ist.

Die eingesetzten Polyazole, inbesondere jedoch die Polybenzimidazole zeichnen sich durch ein hohes Molekulargewicht aus. Gemessen als Intrinsische Viskosität beträgt diese mindestens 0,2 dl/g, vorzugsweise 0,2 bis 3 dl/g.

Weitere bevorzugte Polyazol-Polymere sind Polyimidazole, Polybenzthiazole, Polybenzoxazole, Polyoxadiazole, Polyquinoxalines, Polythiadiazole Poly(pyridine), Poly(pyrimidine), und Poly(tetrazapyrene).

Bei der in Schritt A) verwendeten Polyphosphorsäure handelt es sich um handelsübliche Polyphosphorsäuren wie diese beispielsweise von Riedel-de Haen erhältlich sind. Die Polyphosphorsäuren $H_{n+2}P_nO_{3n+1}$ (n>1) besitzen üblicherweise einen Gehalt berechnet als $P_2O_5$ (acidimetrisch) von mindestens 83%. Anstelle einer Lösung des Präpolymeren kann auch eine Dispersion/Suspension erzeugt werden.

Die in Schritt A) erzeugte Mischung weist ein Gewichtsverhältnis Polyphosphorsäure zu Polyazol-Polymer von 1:10000 bis 10000:1, vorzugsweise 1:1000 bis 1000:1, insbesondere 1:100 bis 100:1, auf.

Die Bildung der Polymermembran gemäß Schritt C) erfolgt mittels an sich bekannter Maßnahmen (Gießen, Sprühen, Rakeln, Extrusion) die aus dem Stand der Technik zur Polymerfilm-Herstellung bekannt sind. Als Träger sind alle unter den Bedingungen als inert zu bezeichnenden Träger geeignet. Zur Einstellung der Viskosität kann die Lösung gegebenenfalls mit verdünnter oder konzentrierte Phosphorsäure (konz. Phosphorsäure, 85%) und/oder Wasser versetzt werden. Hierdurch kann die Viskosität auf den gewünschten Wert eingestellt und die Bildung der Membran erleichtert werden. Die Dicke beträgt zwischen 20 und 2000 µm, vorzugsweise zwischen 30 und 1500 µm, insbesondere zwischen 50 und 1200 µm. Die Temperatur der erwärmten Lösung beträgt bis zu 400°C, vorzugsweise zwischen 150 und 350°C, insbesondere zwischen 190 und 300°C.

Behandlung der gemäß Schritt C) erzeugten Membran in Gegenwart von Feuchtigkeit bei Temperaturen und für eine Dauer ausreichend bis die Membran selbsttragend ist, so daß sie ohne Beschädigung vom Träger abgelöst werden kann (Schritt D).

Die Behandlung der Membran in Schritt D) erfolgt bei Temperaturen oberhalb 0°C und kleiner 150°C, vorzugsweise bei Temperaturen zwischen 10°C und 120°C, insbesondere zwischen Raumtemperatur (20°C) und 90°C, in Gegenwart von Feuchtigkeit bzw. Wasser, verdünnter Phosphorsäure und/oder Wasserdampf. Die Behandlung erfolgt vorzugsweise unter Normaldruck, kann aber auch unter Einwirkung von Druck erfolgen. Wesentlich ist, daß die Behandlung in Gegenwart von ausreichender Feuchtigkeit geschieht, wodurch die anwesende Polyphosphorsäure durch partielle Hydrolyse unter Ausbildung niedermolekularer Polyphosphorsäure und/oder Phosphorsäure zur Verfestigung der Membran beiträgt.

Die partielle Hydrolyse der Polyphosphorsäure in Schritt D) führt zu einer Verfestigung der Membran und zu einer Abnahme der Schichtdicke und Ausbildung einer Membran mit einer Dicke zwischen 15 und 400 µm, vorzugsweise zwischen 20 und 200 µm, insbesondere zwischen 20 und 150 µm, die selbsttragend ist. Die in der Polyphosphorsäure vorliegenden intra- und intermolekularen Strukturen (z.B. Netzwerke des Polyazols mit der Polyphosphorsäure) führen zu einer geordneten Membranbildung, welche für die besonderen Eigenschaften der gebildeten Membran verantwortlich zeichnet.

Die obere Temperaturgrenze der Behandlung gemäß Schritt D) beträgt in der Regel 150°C. Bei extrem kurzer Einwirkung von Feuchtigkeit, beispielsweise von überhitztem Dampf kann dieser Dampf auch heißer als 150°C sein. Wesentlich für die Temperaturobergrenze ist die Dauer der Behandlung.

Die partielle Hydrolyse (Schritt D) kann auch in Klimakammern erfolgen bei der unter definierter Feuchtigkeitseinwirkung die Hydrolyse gezielt gesteuert werden kann. Hierbei kann die Feuchtigkeit durch die Temperatur bzw. Sättigung der kontaktierenden Umgebung beispielsweise Gase wie Luft, Stickstoff, Kohlendioxid oder andere geeignete Gase, Wasserdampf und/oder verdünnte Phosphorsäure gezielt eingestellt werden. Die Behandlungsdauer ist abhängig von den vorstehend gewählten Parametern.

Weiterhin ist die Behandlungsdauer von der Dicke der Membran abhängig.

In der Regel beträgt die Behandlungsdauer zwischen wenigen Sekunden bis Minuten, beispielsweise unter Einwirkung von überhitztem Wasserdampf, oder bis hin zu ganzen Tagen, beispielsweise an der Luft bei Raumtemperatur und geringer relativer Luftfeuchtigkeit. Bevorzugt beträgt die Behandlungsdauer zwischen 10 Sekunden und 300 Stunden, insbesondere 1 Minute bis 200 Stunden.

Wird die partielle Hydrolyse bei Raumtemperatur (20°C) mit Umgebungsluft einer relativen Luftfeuchtigkeit von 40-80% durchgeführt beträgt die Behandlungsdauer zwischen 1 und 200 Stunden.

Die gemäß Schritt D) erhaltene Membran ist selbsttragend, d.h. sie kann vom Träger ohne Beschädigung gelöst und anschließend gegebenenfalls direkt weiterverarbeitet werden.

Über den Grad der Hydrolyse, d.h. die Dauer, Temperatur und Umgebungsfeuchtigkeit, ist die Konzentration an Phosphorsäure und damit die Leitfähigkeit der erfindungsgemäßen Polymermembran einstellbar. Erfindungsgemäß wird die Konzentration der Phosphorsäure als Mol Säure pro Mol Wiederholungseinheit des Polymers angegeben. Im Rahmen der vorliegenden Erfindung ist eine Konzentration (Mol Phosporsäure bezogen auf eine Wiederholungseinheit der Formel (III), d.h. Polybenzimidazol) zwischen 10 und 35, insbesondere zwischen 12 und 20, bevorzugt. Derartig hohe Dotierungsgrade (Konzentrationen) sind durch Dotieren von Polyazolen mit kommerziell erhältlicher ortho-Phosphorsäure nur sehr schwierig bzw. gar nicht zugänglich und führen zum Verlust der mechanischen Intregretät.

Im Anschluß an die Behandlung gemäß Schritt D) kann die Membran durch Einwirken von Hitze in Gegenwart von Luftsauerstoff an der Oberfläche noch vernetzt werden. Diese Härtung der Membranoberfläche verbessert die Eigenschaften der Membran zusätzlich.
Die Vernetzung kann auch durch Einwirken von IR bzw. NIR (IR = InfraRot, d. h. Licht mit einer Wellenlänge von mehr als 700 nm; NIR = Nahes IR, d. h. Licht mit einer Wellenlänge im Bereich von ca. 700 bis 2000 nm bzw. einer Energie im Bereich von ca. 0.6 bis 1.75 eV) erfolgen. Eine weitere Methode ist die Bestrahlung mit β-Strahlen. Die Strahlungsdosis beträgt hierbei zwischen 5 und 200 kGy.

Die erfindungsgemäße Polymermembran weist verbesserte Materialeigenschaften gegenüber den bisher bekannten dotierten Polymermembranen auf. Insbesondere zeigen sie im Vergleich mit bekannten dotierten Polymermembranen bessere Leistungen. Diese begründet sich insbesondere durch eine verbesserte Protonenleitfähigkeit. Diese beträgt bei Temperaturen von 120°C mindestens 0,1 S/cm, vorzugsweise mindestens 0,12 S/cm.

Zur weiteren Verbesserung der anwendungstechnischen Eigenschaften können der Membran zusätzlich noch Füllstoffe, insbesondere protonenleitende Füllstoffe, sowie zusätzliche Säuren zugesetzt werden. Die Zugabe kann entweder bei Schritt A oder B erfolgen.

Nicht limitierende Beispiele für Protonenleitende Füllstoffe sind

| | |
|---|---|
| Sulfate wie: | $CsHSO_4$, $Fe(SO_4)_2$, $(NH_4)_3H(SO_4)_2$, $LiHSO_4$, $NaHSO_4$, $KHSO_4$, $RbSO_4$, $LiN_2H_5SO_4$, $NH_4HSO_4$, |
| Phosphate wie | $Zr_3(PO_4)_4$, $Zr(HPO_4)_2$, $HZr_2(PO_4)_3$, $UO_2PO_4.3H_2O$, $H_8UO_2PO_4$, $Ce(HPO_4)_2$, $Ti(HPO_4)_2$, $KH_2PO_4$, $NaH_2PO_4$, $LiH_2PO_4$, $NH_4H_2PO_4$, $CsH_2PO_4$, $CaHPO_4$, $MgHPO_4$, $HSbP_2O_8$, $HSb_3P_2O_{14}$, $H_5Sb_5P_2O_{20}$, |
| Polysäure wie | $H_3PW_{12}O_{40}.nH_2O$ (n=21-29), $H_3SiW_{12}O_{40}.nH_2O$ (n=21-29), $H_xWO_3$, $HSbWO_6$, $H_3PMo_{12}O_{40}$, $H_2Sb_4O_{11}$, $HTaWO_6$, $HNbO_3$, $HTiNbO_5$, $HTiTaO_5$, $HSbTeO_6$, $H_5Ti_4O_9$, $HSbO_3$, $H_2MoO_4$ |
| Selenite und Arsenide wie | $(NH_4)_3H(SeO_4)_2$, $UO_2AsO_4$, $(NH_4)_3H(SeO_4)_2$, $KH_2AsO_4$, $Cs_3H(SeO_4)_2$, $Rb_3H(SeO_4)_2$, |
| Oxide wie | $Al_2O_3$, $Sb_2O_5$, $ThO_2$, $SnO_2$, $ZrO_2$, $MoO_3$ |
| Silikate wie | Zeolithe, Zeolithe($NH_4$+), Schichtsilikate, Gerüstsilikate, H-Natrolite, H-Mordenite, $NH_4$-Analcine, $NH_4$-Sodalite, $NH_4$-Gallate, H-Montmorillonite |
| Säuren wie | $HClO_4$, $SbF_5$ |
| Füllstoffe wie | Carbide, insbesondere SiC, $Si_3N_4$, Fasern, insbesondere Glasfasern, Glaspulvem und/oder Polymerfasern, bevorzugt auf Basis von Polyazolen. |

Als weiteres kann diese Membran auch perfluorierte Sulfonsäure Additive (0,1-20 wt%, bevorzugt 0,2-15 wt%, ganz bevorzugt 0,2-10 wt%) enthalten. Diese Additive führen zur Leistungsverbesserung, in der Nähe der Kathode zur Erhöhung der Sauerstofflöslichkeit und Sauerstoffdiffusion und zur Verringerung der Adsorbtion von Phosphorsäure und Phosphat zu Platin. (Electrolyte additives for phosphoric acid fuel cells. Gang, Xiao; Hjuler, H. A.; Olsen, C.; Berg, R. W.; Bjerrum, N. J.. Chem. Dep. A, Tech. Univ. Denmark, Lyngby, Den. J. Electrochem. Soc. (1993), 140(4), 896-902 und Perfluorosuffonimide as an additive in phosphoric acid fuel cell. Razaq, M.; Razaq, A.; Yeager, E.; DesMarteau, Darryl D.; Singh, S. Case Cent.

Electrochem. Sci., Case West. Reserve Univ., Cleveland, OH, USA. J. Electrochem. Soc. (1989), 136(2), 385-90.)
Nicht limitierende Beispiele für persulfonierte Additive sind: Trifluomethansulfonsäure, Kaliumtrifluormethansulfonat, Natriumtrifluormethansulfonat, Lithiumtrifluormethansulfonat, Ammoniumtrifluormethansulfonat, Kaliumperfluorohexansulfonat, Natriumperfluorohexansulfonat, Lithiumperfluorohexansulfonat, Ammoniumperfluorohexansulfonat, Perfluorohexansulfonsäure, Kaliumnonafluorbutansulfonat, Natriumnonafluorbutansulfonat, Lithiumnonafluorbutansulfonat, Ammoniumnonafluorbutansulfonat, Cäsiumnonafluorbutansulfonat, Triethylammoniumperfluorohexasulfonat, Perflurosulfoimide und Nafion.

Als weiteres kann die Membran auch als Additive enthalten, die die im Betrieb bei der Sauerstoffreduktion erzeugten Peroxidradikale abfangen (primäre Anitoxidanzien) oder zerstören (sekundäre Antioxidanzien) und dadurch wie in JP2001118591 A2 beschrieben Lebensdauer und Stabilität der Membran und Membranelektrodeneinheit verbessern. Die Funktionsweise und molekularen Strukturen solcher Additive sind in F. Gugumus in Plastics Additives, Hanser Verlag, 1990; N.S. Allen, M. Edge Fundamentals of Polymer Degradation and Stability, Elsevier, 1992; oder H. Zweifel, Stabilization of Polymeric Materials, Springer, 1998 beschrieben.
Nicht limitierende Beispiele für solche Additive sind:
Bis(trifluormethyl)nitroxid, 2,2-Diphenyl-1-pikrinylhydrazyl, Phenole, Alkylphenole, sterisch gehinderte Alkylphenole wie zum Beispiel Irganox, aromatische Amine, sterisch gehinderte Amine wie zum Beispiel Chimassorb; sterisch gehinderte Hydroxylamine, sterisch gehinderte Alkylamine, sterisch gehinderte Hydroxylamine, sterisch gehinderte Hydroxylaminether, Phosphite wie zum Beispiel Irgafos, Nitrosobenzol, Methyl.2-nitroso-propan, Benzophenon, Benzaldehyd-tert.-butylnitron, Cysteamin, Melanine, Bleioxide, Manganoxide, Nickeloxide, Cobaltoxide.

Zu möglichen Einsatzgebieten der erfindungsgemäßen, dotierten Polymermembranen gehören unter anderem die Verwendung in Brennstoffzellen, bei der Elektrolyse, in Kondensatoren und in Batteriesystemen. Aufgrund ihres Eigenschaftsprofils werden die dotierten Polymermembranen vorzugsweise in Brennstoffzellen verwendet.

Die vorliegende Erfindung betrifft auch eine Membran-Elektroden-Einheit, die mindestens eine erfindungsgemäße Polymermembran aufweist. Für weitere Informationen über Membran-Elektroden-Einheiten wird auf die Fachliteratur, insbesondere auf die Patente US-A-4,191,618, US-A-4,212,714 und US-A-4,333,805 verwiesen. Die in den vorstehend genannten Literaturstellen [US-A-4,191,618, US-A-4,212,714 und US-A-4,333,805] enthaltene Offenbarung hinsichtlich des Aufbaues und der Herstellung von Membran-Elektroden-Einheiten, sowie der zu wählenden Elektroden , Gasdiffusionslagen und Katalysatoren ist auch Bestandteil der Beschreibung.

In einer Variante der vorliegenden Erfindung kann die Membranbildung anstelle auf einem Träger auch direkt auf der Elektrode erfolgen. Die Behandlung gemäß Schritt D) kann hierdurch entsprechend verkürzt werden, da die Membran nicht mehr selbsttragend sein muß. Auch eine solche Membran ist Gegenstand der vorliegenden Erfindung.

Ein weiterer Gegenstand der vorliegenden Erfindung ist eine Elektrode die mit einer protonenleitenden Polymerbeschichtung auf Basis von Polyazolen die eine Konzentration von Phosphorsäure ausgedrückt als Mol Säure pro Mol Wiederholungseinheit des Polymers zwischen 12 und 20 aufweist und erhältlich durch ein Verfahren umfassend die Schritte

A) Lösen des Polyazol-Polymeren in Polyphosphorsäure,
B) Erwärmen der Lösung erhältlich gemäß Schritt A) unter Inertgas auf Temperaturen von bis zu 400°C, vorzugsweise bis zu 350°C, insbesondere von bis zu 300°C,
C) Aufbringen einer Schicht unter Verwendung der Lösung des Polyazol-Polymeren gemäß Schritt B) auf einer Elektrode und
D) Behandlung der in Schritt C) gebildeten Schicht.

Die Beschichtung hat eine Dicke zwischen 2 und 300 µm, vorzugsweise zwischen 5 und 250 µm, insbesondere zwischen 10 und 100 µm hat.

Die vorstehend beschriebenen Varianten und bevorzugten Ausführungsformen sind auch für diesen Gegenstand gültig, so daß an dieser Stelle auf deren Wiederholung verzichtet wird.

Eine derartig beschichtete Elektrode kann in einer Membran-Elektroden-Einheit, die gegebenenfalls mindestens eine erfindungsgemäße Polymermembran aufweist, eingebaut werden.

In einer weiteren Variante kann auf die erfindungsgemäße Membran eine katalytisch aktive Schicht aufgebracht werden und diese mit einer Gasdiffusionslage verbunden werden. Hierzu wird gemäß den Schritten A) bis D) eine Membran gebildet und der Katalysator aufgebracht. Auch diese Gebilde sind Gegenstand der vorliegenden Erfindung.

Darüber hinaus kann die Bildung der Membran gemäß den Schritten A) bis D) auch auf einem Träger oder einer Trägerfolie erfolgen, die bereits den Katalysator aufweist. Nach Entfernen des Trägers bzw. der Trägerfolie befindet sich der Katalysator auf der erfindungsgemäßen Membran. Auch diese Gebilde sind Gegenstand der vorliegenden Erfindung.

Ebenfalls Gegenstand der vorliegenden Erfindung ist eine Membran-Elektroden-Einheit, die mindestens eine beschichtete Elektrode und/oder mindestens eine erfindungsgemäße Polymermembran in Kombination mit einer weiteren Polymermembran auf Basis von Polyazolen oder einer Polymerblendmembran enthaltend mindestens ein Polymer auf Basis von Polyazolen aufweist. Als Polyazol wird hierbei ein Polymer enthaltend wiederkehrende Azoleinheiten der allgemeinen Formel (I) und/oder (II), insbesondere der Formel (III).

Allgemeine Messmethoden:

Messmethode für IEC

Die Leitfähigkeit der Membran hängt stark vom Gehalt an Säuregruppen ausgedrückt durch die sog. Ionenaustauschkapazität (IEC) ab. Zur Messung der Ionenaustauschkapazität wird eine Probe mit einem Durchmesser von 3 cm ausgestanzt und in ein mit 100 ml Wasser gefülltes Becherglas gegeben. Die freigesetzte Säure wird mit 0,1 M NaOH titriert. Anschliessend wird die Probe entnommen, überschüssiges Wasser abgetupft und die Probe bei 160°C während 4h getrocknet. Dann bestimmt man das Trockengewicht, $m_0$, gravimetrisch mit einer Genauigkeit von 0,1 mg. Die Ionenaustauschkapazität wird dann aus dem Verbrauch der 0,1 M NaOH bis zum ersten Titrationsendpunkt, $V_1$ in ml, und dem Trockengewicht, $m_0$ in mg, gemäss folgender Formel berechnet:

$$IEC=V_1*300/m_0$$

Messmethode für spezifische Leitfähigkeit

Die spezifische Leitfähigkeit wird mittels Impedanzspektroskopie in einer 4-Pol-Anordnung im potentiostatischen Modus und unter Verwendung von Platinelektroden (Draht, 0,25 mm Durchmesser) gemessen. Der Abstand zwischen den stromabnehmenden Elektroden beträgt 2 cm. Das erhaltene Spektrum wird mit einem einfachen Modell bestehend aus einer parallelen Anordnung eines ohm'schen Widerstandes und eines Kapazitators ausgewertet. Der Probenquerschnitt der phosphorsäuredotierten Membran wird unmittelbar vor der Probenmontage gemessen. Zur Messung der Temperaturabhängigkeit wird die Messzelle in einem Ofen auf die gewünschte Temperatur gebracht und über eine in unmittelbarer Probennähe positioniertes Pt-100 Thermoelement geregelt. Nach Erreichen der Temperatur wird die Probe vor dem Start der Messung 10 Minuten auf dieser Temperatur gehalten

Nachfolgend wird die Erfindung durch Beispiele und Vergleichsbeispiel eingehender erläutert, ohne daß die Erfindung auf diese Beispiele beschränkt werden soll.

**BEISPIELE**

Membranherstellung

10g Polybenzimidazole (PBI) mit einer inherenten Viskosität (IV) von 0,92 dl/g erhalten von der Fabrikationsanlage in Rock Hill, USA, werden in einen 100 ml Dreihalskolben vorgelegt, der mit einem mechanischen Rührer, Stickstoff-Einlaß und Auslaß ausgestattet wurde. Dazu werden 90g Polyphosphorsäure ($P_2O_5$-Gehalt=83,4% (Der Gehalt wurde analytisch bestimmt) gegeben. Diese Mischung wird auf 270°C geheizt und dort während 14h gehalten. Das PBI Polymer löst sich komplett in PPA, aber die 10% PBI/PPA Lösung ist sehr hochviskos. Bei dieser Temperatur werden 33,33g einer 85% Phosphorsäure zugegeben. Die so erhaltene Mischung wird unter Rühren während 1 h auf 240°C abgekühlt und es entsteht eine homogene, giessfähige Lösung. Die erhaltene 7,5%-ige PBI Lösung wird bei 240°C auf Glasplatten gerakelt, die vorher auf 100°C hochgeheizt wurden. Es wurden Filme mit einer Dicke von 150 µm und 200 µm gerakelt. Diese Filme wurden dann bei Raumtemperatur unter Umgebungsbedingungen während 3 Tagen stehen gelassen. Durch Absorption der Feuchtigkeit aus der Luft hydrolysiert Polyphosphorsäure zu Phosphorsäure. Überschüssige Phosphorsäure wird abgetupft und eine mechanisch stabile Membran bestehend aus dem PBI/Polyphosphorsäure/Phosphorsäure-System erhalten.

Zur Bestimmung der inherenten Viskosität wird ein Teil der Lösung nach der Temperaturbehandlung durch Mischen mit destilliertem Wasser ausgefallen. Das so erhaltene harzförmige Produkt wird filtriert, dreimal mit destilliertem Wasser in einem Kneter gewaschen, neutralisiert mit Ammoniumhydroxid, nochmals dreimal mit Wasser gewaschen und abschliessend bei 120°C und 1 Torr während 16h getrocknet und so ein PBI Pulver erhalten. Das PBI Pulver wird mit einer Konzentration von 0,4 Gew% in 96% Schwefelsäure gelöst und dann die inherente Viskosität mit einem Ubbetohde-Viskosimeter in einem bei 25°C temperierten Bad zu 1,68 dl/g bestimmt.

Bestimmung der Membraneigenschaften

Zur Bestimmung des Säuregehaltes werden die Membranen in ein mit Wasser gefülltes Becherglas gegeben und die freigesetzte Säure gegen 0,1 molare Natronlauge titriert. Nach der Titration werden die Membranen in einem Trockenschrank bei 150°C während 4h getrocknet. Dann wird das Trockengewicht $m_0$ bestimmt. Der Säuregehalt, gemessen als Verhältnis Molmenge $H_3PO_4$ pro Wiederholungseinheit Polybenzimidazol (Molmasse PBI = 308 mol/g) wird aus der Menge der bis zum Equivalentpunkt verbrauchten Lauge und $m_0$ berechnet.

Die spezifische Leitfähigkeit wird mittels Impedanzspektroskopie in einer 4-Pol-Anordnung im potentiostatischen Modus und unter Verwendung von Platinelektroden (Draht, 0,25 mm Durchmesser) gemessen. Der Abstand zwischen den stromabnehmenden Elektroden beträgt 2 cm. Das erhaltene Spektrum wird mit einem einfachen Modell bestehend aus einer parallelen Anordnung eines Ohm'schen Widerstandes und eines Kapazitators ausgewertet. Der Probenquerschnitt der phosphorsäuredotierten Membran wird unmittelbar vor der Probenmontage gemessen. Zur Messung der Temperaturabhängigkeit wird die Messzelle in einem Ofen auf die gewünschte Temperatur gebracht und über eine in unmittelbarer Probennähe positioniertes Pt-100 Thermoelement geregelt. Nach Erreichen der Temperatur wird die Probe vor dem Start der Messung 10 Minuten auf dieser Temperatur gehalten.

Die Eigenschaften der erfindungsgemässen Membranen sind in Tabelle 1 zusammengefasst.

| Membran | Membrandicke nach Rakeln [µm] | $n(H_3PO_4)/n(PBI)$ | Messtemperatur | Spezifische Leitfähigkeit [S/cm] |
|---|---|---|---|---|
| 1 | 150 | 13,2 | 25 | 0,115 |
| | | | 40 | 0,099 |
| | | | 60 | 0,074 |
| | | | 80 | 0,081 |
| | | | 100 | 0,101 |
| | | | 120 | 0,118 |
| | | | 140 | 0,126 |
| | | | 160 | 0,128 |
| 2 | 200 | 14 | 25 | 0,115 |
| | | | 40 | 0,087 |
| | | | 60 | 0,071 |
| | | | 80 | 0,080 |
| | | | 100 | 0,100 |
| | | | 120 | 0,115 |
| | | | 140 | 0,124 |
| | | | 160 | 0,126 |

**Patentansprüche**

1. Protonenleitende Polymermembran auf Basis von Polyazolen die eine Konzentration von Phosphorsäure ausgedrückt als Mol Säure pro Mol Wiederholungseinheit des Polymers zwischen 12 und 20 ausweist, erhältlich durch ein Verfahren umfassend die Schritte

    A) Lösen des Polyazol-Polymeren in Polyphosphorsäure,
    B) Erwärmen der Lösung erhältlich gemäß Schritt A) unter Inertgas auf Temperaturen von bis zu 400°C,
    C) Bilden einer Membran unter Verwendung der Lösung des Polyazol-Polymeren gemäß Schritt B) auf einem Träger und
    D) Behandlung der in Schritt C) gebildeten Membran in Gegenwart von Feuchtigkeit bei Temperaturen und für eine Dauer ausreichend bis die Membran selbsttragend ist, so daß sie ohne Beschädigung vom Träger abgelöst werden kann.

2. Membran gemäß Anspruch 1, **dadurch gekennzeichnet, daß** in Schritt A) eingesetzte Polyphosphorsäure mit einem Gehalt berechnet als $P_2O_5$ acidimetrisch von mindestens 85% hat.

3. Membran gemäß Anspruch 1, **dadurch gekennzeichnet, daß** in Schritt A) anstelle einer Lösung des Polymeren eine Dispersion/Suspension erzeugt wird.

4. Membran gemäß Anspruch 1, **dadurch gekennzeichnet, daß** in Schritt A) eingesetzte Polymer wiederkehrende

Azoleinheiten der allgemeinen Formel (I) und/oder (II)

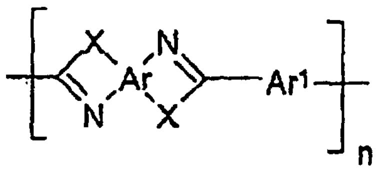

(I)

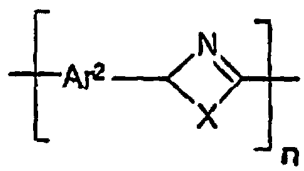

(II)

worin

Ar gleich oder verschieden sind und für eine vierbindige aromatische oder heteroaromatische Gruppe, die ein- oder mehrkemig sein kann,

$Ar^1$ gleich oder verschieden sind und für eine zweibindige aromatische oder heteroaromatische Gruppe, die ein- oder mehrkemig sein kann,

$Ar^2$ gleich oder verschieden sind und für eine zwei oder dreibindige aromatische oder heteroaromatische Gruppe, die ein- oder mehrkernig sein kann,

X gleich oder verschieden ist und für Sauerstoff, Schwefel oder eine Aminogruppe, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt,

enthält.

**5.** Membran gemäß Anspruch 1, **dadurch gekennzeichnet, daß** in Schritt A) ein Polymer ausgewählt aus der Gruppe Polybenzimidazol, Poly(pyridine), Poly(pyrimidine), Polyimidazole, Polybenzthiazole, Polybenzoxazole, Polyoxadiazole, Polyquinoxalines, Polythiadiazole und Poly(tetrazapyrene) eingesetzt wird.

**6.** Membran gemäß Anspruch 1, **dadurch gekennzeichnet, daß** in Schritt A) eingesetzte Polymer ein oder mehrere wiederkehrende Benzimidazoleinheiten der Formel

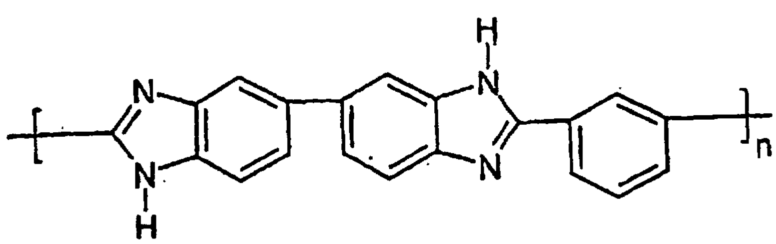

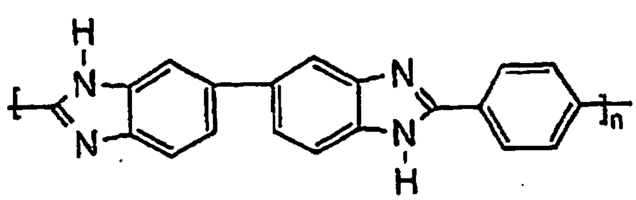

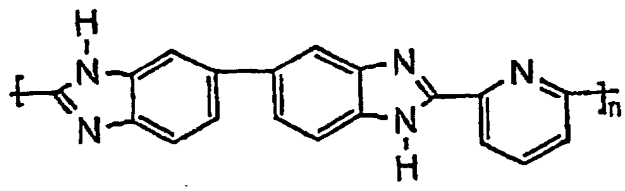

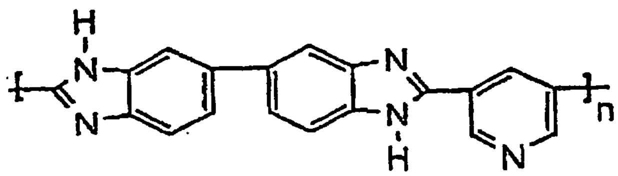

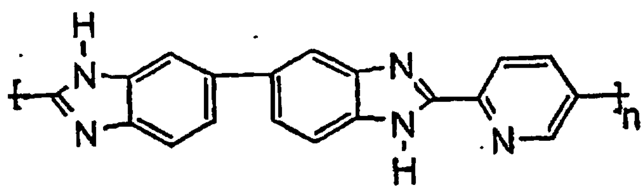

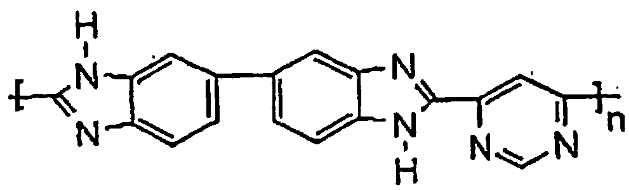

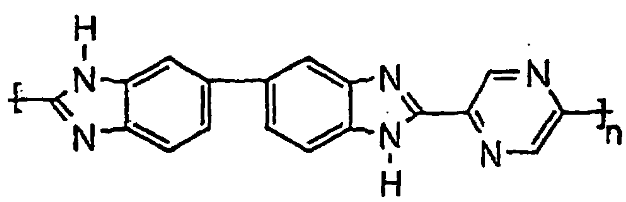

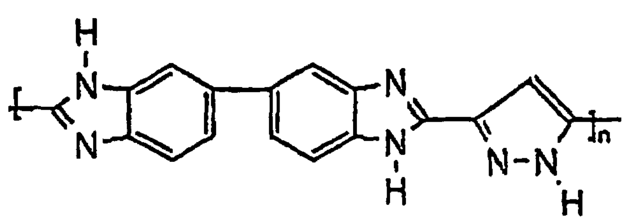

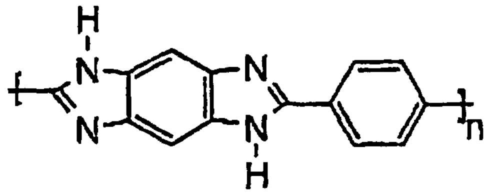

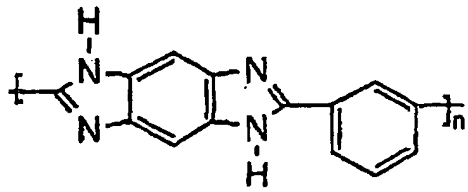

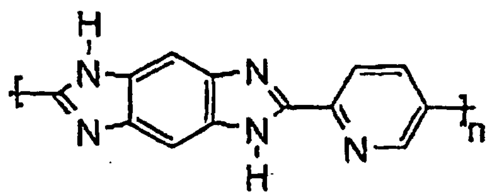

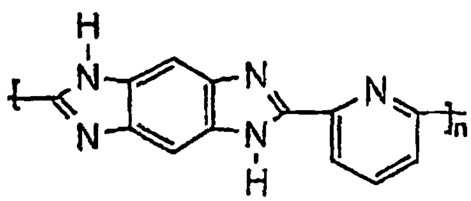

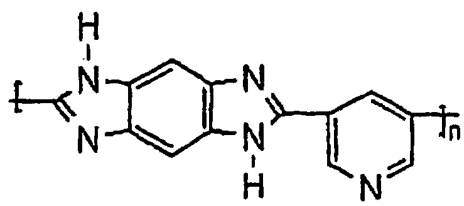

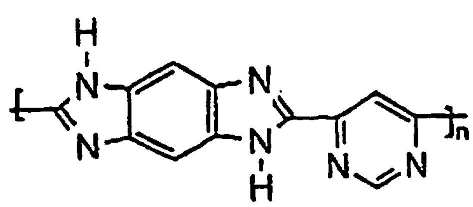

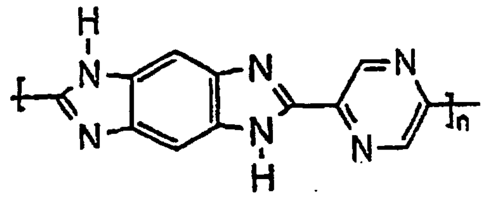

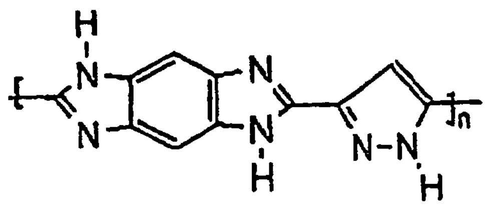

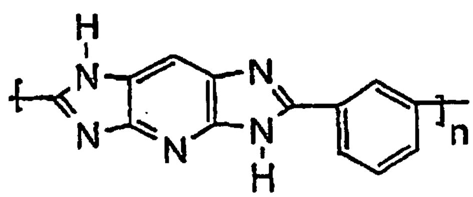

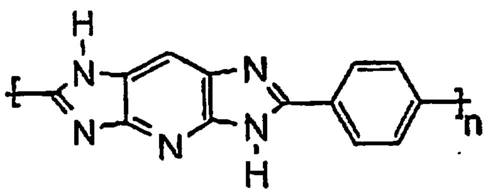

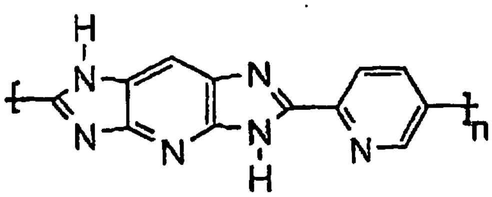

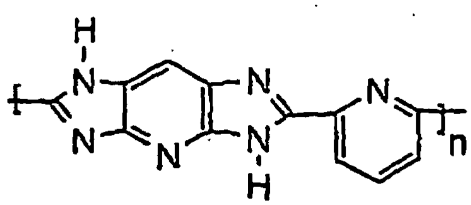

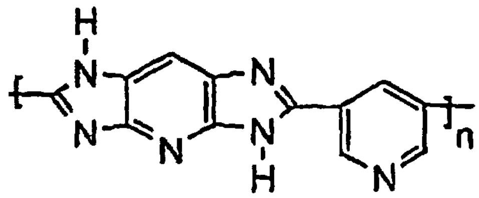

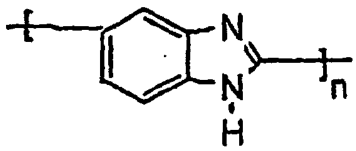

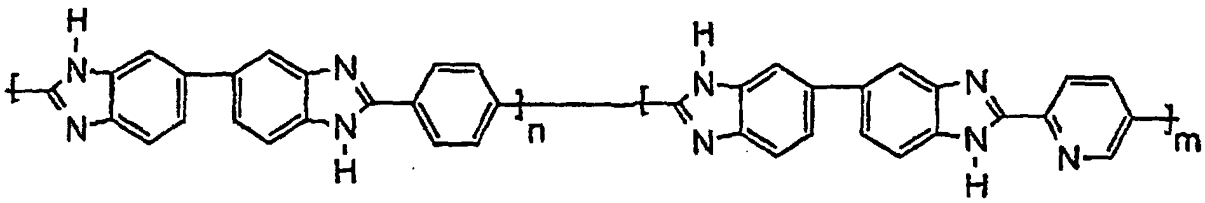

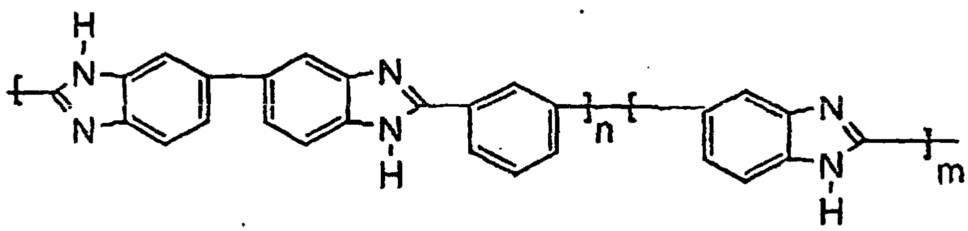

wobei n eine ganze Zahl größer gleich 10, vorzugsweise größer gleich 100 ist, enthält.

7. Membran gemäß Anspruch 1, **dadurch gekennzeichnet, daß** nach Schritt B) und vor Schritt C) die Viskosität durch Zugabe von Phosphorsäure eingestellt wird.

8. Membran gemäß Anspruch 1, **dadurch gekennzeichnet, daß** die Behandlung der Membran in Schritt D) erfolgt bei Temperaturen oberhalb 0°C und bis zu einer Temperatur von 150°C, vorzugsweise bei Temperaturen zwischen 10°C und 120°C, Insbesondere zwischen 20°C und 90°C, in Gegenwart von Feuchtigkeit bzw. Wasser, verdünnter Phosphorsäure und/oder Wasserdampf erfolgt.

9. Membran gemäß Anspruch 1, **dadurch gekennzeichnet, daß** die Behandlung der Membran in Schritt D) zwischen 10 Sekunden und 300 Stunden, vorzugsweise 1 Minute bis 200 Stunden, beträgt.

10. Membran gemäß Anspruch 1, **dadurch gekennzeichnet, daß** diese im Anschluß an die Behandlung gemäß Schritt D) durch Einwirken von IR bzw. NIR vernetzt ist.

11. Membran gemäß Anspruch 1, **dadurch gekennzeichnet, daß** in Schritt C) als Träger eine Elektrode gewählt wird.

12. Membran gemäß Anspruch 1, **dadurch gekennzeichnet, daß** die in Schritt C) gebildete Membran eine Dicke zwischen 20 und 2000 μm, vorzugsweise zwischen 30 und 1500 μm, insbesondere zwischen 50 und 1200 μm hat.

**13.** Membran gemäß Anspruch 1, **dadurch gekennzeichnet, daß** die in Schritt D) gebildete Membran eine Dicke zwischen 15 und 400 µm, vorzugsweise zwischen 20 und 200 µm, insbesondere zwischen 20 und 150 µm, die selbsttragend ist.

**14.** Membran gemäß Anspruch 1, **dadurch gekennzeichnet, daß** sie eine Schicht enthaltend eine katalytisch aktive Komponente aufweist

**15.** Elektrode mit einer protonenleitenden Polymerbeschichtung auf Basis von Polyazolen die eine Konzentration von Phosphorsäure ausgedrückt als Mol Säure pro Mol Wiederholungseinheit des Polymers zwischen 12 und 20 ausweist, erhältlich durch ein Verfahren umfassend die Schritte

A) Lösen des Polyazol-Polymeren in Polyphosphorsäure,
B) Erwärmen der Lösung erhältlich gemäß Schritt A) unter Inertgas auf Temperaturen von bis zu 400°C,
C) Aufbringen einer Schicht unter Verwendung der Lösung des Polyazol-Polymeren gemäß Schritt B) auf einer Elektrode und
D) Behandlung der in Schritt C) gebildeten Schicht bei Temperaturen oberhalb 0°C und bis zu einer Temperatur von 150°C in Gegenwart von Feuchtigkeit.

**16.** Elektrode gemäß Anspruch 15, wobei die Beschichtung eine Dicke zwischen 2 und 300 µm, vorzugsweise zwischen 5 und 250 µm, Insbesondere zwischen 10 und 100 µm hat.

**17.** Membran-Elektroden-Einheit enthaltend mindestens eine Elektrode gemäß Anspruch 15 oder 16 und mindestens eine Membran gemäß einem oder mehreren der Ansprüche 1 bis 14.

**18.** Membran-Elektroden-Einheit enthaltend mindestens eine Elektrode und mindestens eine Membran gemäß einem oder mehreren der Ansprüche 1 bis 14.

**19.** Membran-Elektroden-Einheit enthaltend mindestens eine Elektrode gemäß Anspruch 15 oder 16.

**20.** Membran-Elektroden-Einheit gemäß einem oder mehreren der Ansprüche 17 bis 19, **dadurch gekennzeichnet, daß** sie mindestens eine weitere Polymermembran auf Basis von Polyazolen und/oder einer Polymerblendmembran enthaltend mindestens ein Polymer auf Basis von Polyazolen enthält.

**21.** Brennstoffzelle enthaltend eine oder mehrere Membran-Elektroden-Einheiten gemäß einem der Ansprüche 17 bis 20.

## Claims

**1.** Proton-conducting polymer membrane based on polyazoles which has a concentration of phosphoric acid, when expressed as mols of acid per mol of repeating unit of the polymer, of between 12 and 20, obtainable by a method comprising the steps of

A) dissolving the polyazole polymer in polyphosphoric acid,
B) heating the solution obtainable by step A) under inert gas to temperatures of up to 400°C,
C) forming a membrane by using the solution of the polyazole polymers from step B) on a substrate and
D) treating the membrane formed in step C) in the presence of moisture at temperatures, and for a period, sufficient for the membrane to become self-supporting, thus enabling it to be detached from the substrate without any damage.

**2.** Membrane according to claim 1, **characterised in that** polyphosphoric acid used in step A) has with a content, calculated as $P_2O_5$ acidimetric, of at least 85%.

**3.** Membrane according to claim 1, **characterised in that**, rather than a solution of the polymer, a dispersion/suspension is produced

**4.** Membrane according to claim 1, **characterised in that** polymer used in step A) contains repeating azole units having the general formula (I) and/or (II)'

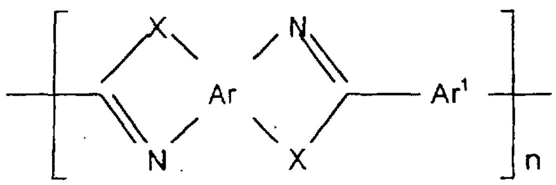

(I)

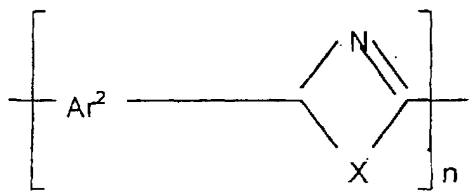

(II)

where

- Ar are the same or different and for a tetravalent aromatic or hetero-aromatic groupwhich may be mononuclear or polynuclear,
- $Ar^1$ are the same or different and for a bivalent aromatic or hetero-aromatic groupwhich may be mononuclear or polynuclear,
- $Ar^2$ are the same or different and for a bilavent or trivalent aromatic or hetero-aromatic group which may be mononuclear or polynuclear,
- X is the same or different and for oxygen, sulphur or an amino group and carries a hydrogen atom, a group having 1 - 20 carbon atoms, preferably a branched or unbranched alkyl or alkoxy group, or an aryl group as a further remainder.

**5.** Membrane according to claim 1, **characterised in that** in step A) a polymer selected from the group polybenzimidazole, poly(pyridine), poly(pyrimidine), polyimidazole, polybenzthiazole, polybenzoxazole, polyoxadiazole, polyquinoxalines, polythiadiazole and poly(tetrazapyrene) is used.

**6.** Membrane according to claim 1, **characterised in that** polymer used in step A) contains one or more repeating benzimidazole units of the formula

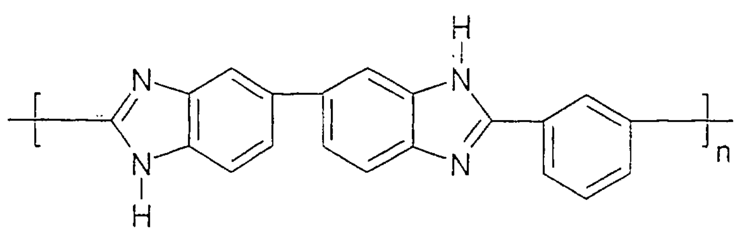

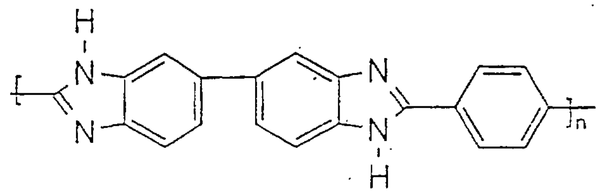

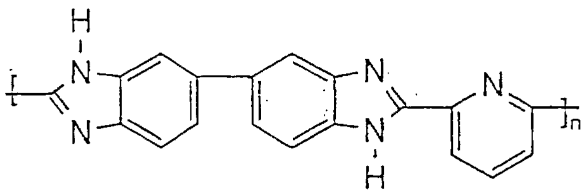

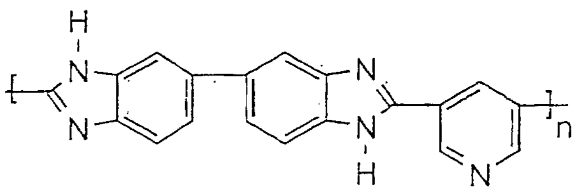

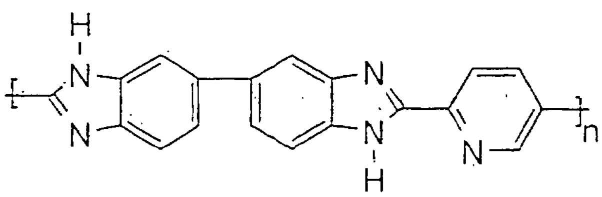

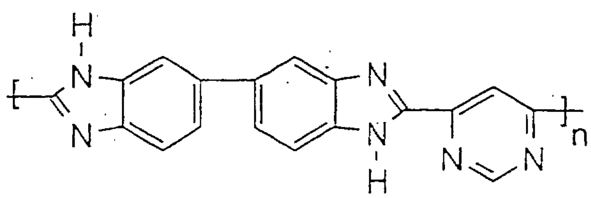

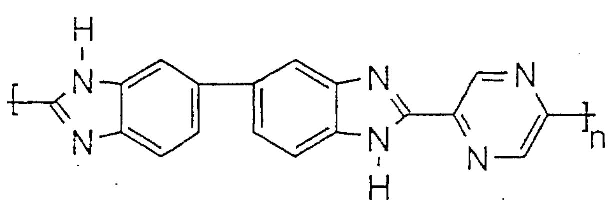

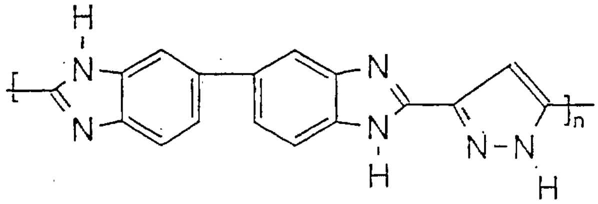

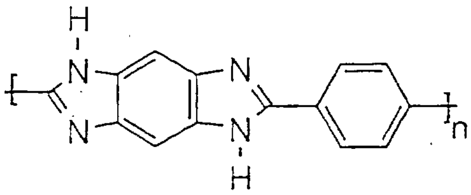

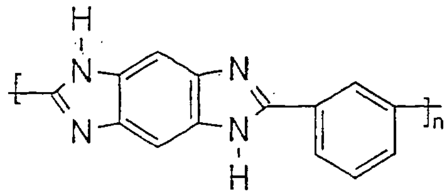

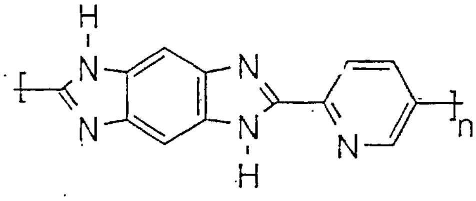

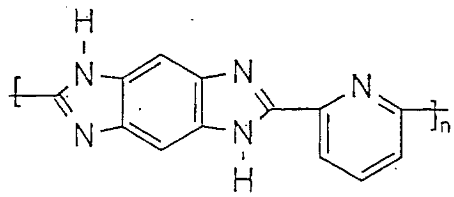

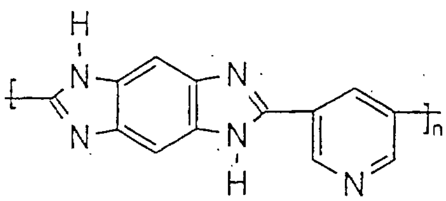

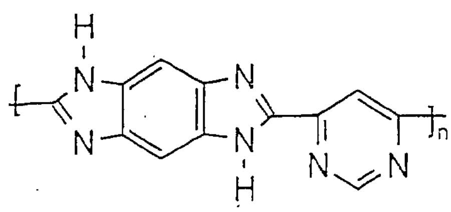

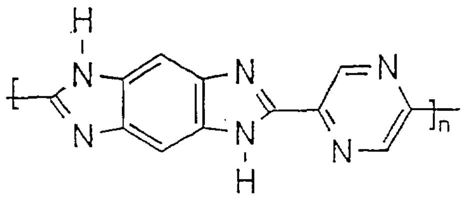

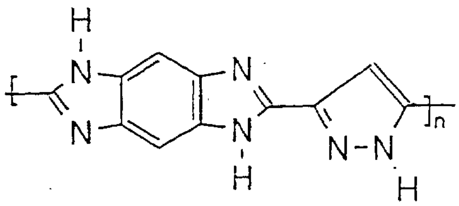

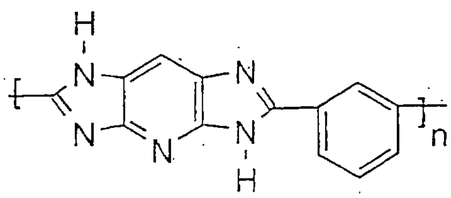

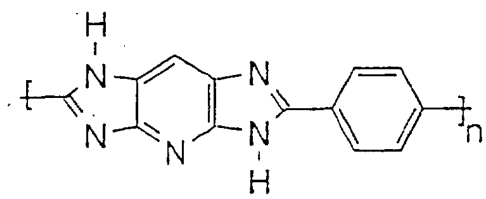

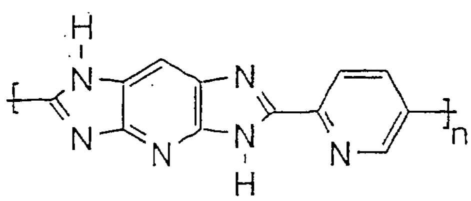

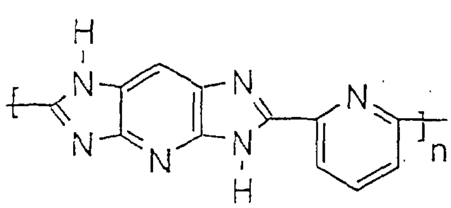

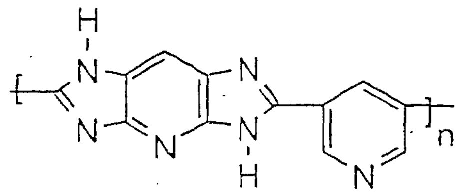

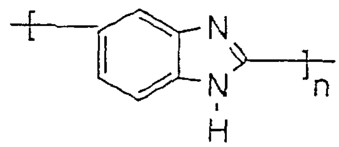

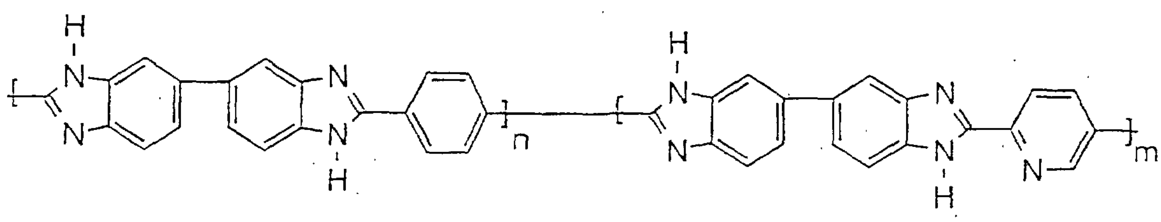

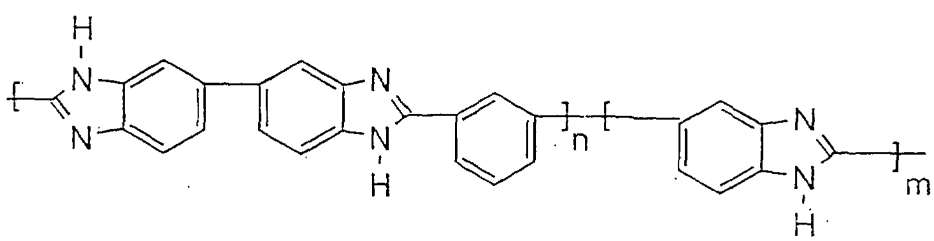

where n is a whole number equal to or greater than 10 and preferably equal to or greater than 100.

**7.** Membrane according to claim 1, **characterised in that** viscosity is set after step B) and before step C) by adding phosphoric acid.

**8.** Membrane according to claim 1, **characterised in that** the treatment of the membrane in step D takes place at temperatures above 0°C and up to a temperature of 150°C and preferably at temperatures of between 10°C and 120°C and in particular between 20° and 90°C in the presence of moisture or water, dilute phosphoric acid and/ or water vapour.

**9.** Membrane according to claim 1, **characterised in that** the treatment of the membrane in step D) is between 10 seconds and 300 hours and preferably from 1 minute to 200 hours.

**10.** Membrane according to claim 1, **characterised in that** following the treatment in step D) it is cross-linked by exposure to IR or NIR.

**11.** Membrane according to claim 1, **characterised in that** an electrode is selected as a substrate in step C).

**12.** Membrane according to claim 1, **characterised in that** the membrane formed in step C) has a thickness of between

20 and 2000 µm and preferably between 30 and 1500 µm and in particular between 50 and 1200 µm.

**13.** Membrane according to claim 1, **characterised in that** the membrane formed in step D) has a thickness of between 15 and 400 µm and preferably between 20 and 200 µm and in particular between 20 and 150 µm, which is self-supporting.

**14.** Membrane according to claim 1, **characterised in that** it has a layer containing a catalytically active component.

**15.** Electrode having a proton-conducting polymer coating based on polyazoles which has a concentration of phosphoric acid, when expressed as mols of acid per mol of repeating unit of the polymer, of between 12 and 20, obtainable by a method comprising the steps of

A) dissolving the polyazole polymer in polyphosphoric acid,
B) heating the solution obtainable by step A) under inert gas to temperatures of up to 400°C,
C) Applying a layer to an electrode by using the solution of the polyazole polymer from step B) and
D) treating the layer formed in step C) at temperatures above 0°C and up to a temperature of 150°C in the presence of moisture.

**16.** Electrode according to claim 15, wherein the coating has a thickness of between 2 and 300 µm and preferably between 5 and 250 mµ and in particular between 10 and 100 µm.

**17.** Membrane-electrode unit containing at least one electrode according to claim 15 or 16 and at least one membrane according to one or more of claims 1 to 14.

**18.** Membrane-electrode unit containing at least one electrode and at least one membrane according to one or more of claims 1 to 14.

**19.** Membrane-electrode unit containing at least one electrode according to claim 15 or 16.

**20.** Membrane-electrode unit according to one or more of claims 17 to 19, **characterised in that** it contains at least one further polymer membrane based on polyazoles and/or a polymer blend membrane containing at least one polymer based on polyazoles.

**21.** Fuel cell containing one or more membrane-electrode units according to one of claims 17 to 20.

**Revendications**

**1.** Membrane polymère conductrice de protons à base de polyazoles présentant une concentration en acide phosphorique exprimée en mole d'acide par mole d'unité de répétition de polymère entre 12 et 20, que l'on peut obtenir par les étapes suivantes :

A) Dissolution du polymère polyazole dans l'acide polyphosphorique,
B) Chauffage de la solution obtenue à l'étape A) sous atmosphère de gaz inerte à des températures jusqu'à 400° C.
C) Formation d'une membrane en utilisant la solution de polymère polyazole selon l'étape B) sur un support et
D) Traitement de la membrane obtenue à l'étape C) en présence d'humidité à des températures et pour une durée suffisante jusqu'à ce que la membrane soit autoporteuse, de façon à ce qu'elle puisse être ôtée du support sans dommage.

**2.** Membrane selon la revendication 1, **caractérisée par le fait que** l'acide polyphosphorique employé à l'étape A) a une teneur en $P_2O_5$ acidimétrique d'au moins 85 %.

**3.** Membrane selon la revendication 1, **caractérisée par le fait qu'**à l'étape A) à la place d'une solution de polymère, on produit une dispersion/suspension.

**4.** Membrane selon la revendication 1, **caractérisée par le fait que** le polymère utilisé à l'étape A contient des unités azoles répétées de formule générale (I) et/ou (II)

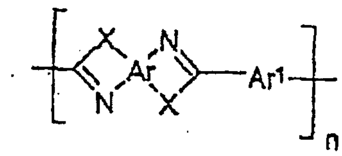

(I)

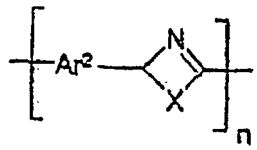

(II)

dans lesquelles

Ar sont semblables ou différents et pour un groupe quadrivalent aromatique ou hétéroaromatique, pouvant être à un ou plusieurs noyaux,

$Ar^1$ sont semblables ou différents et pour un, groupe bivalent aromatique ou hétéroaromatique, pouvant être à un ou plusieurs noyaux,

$Ar^2$ sont semblables ou différents et pour un groupe bivalent aromatique ou hétéroaromatique, pouvant être à un ou plusieurs noyaux,

X est semblable ou différent et contient pour l'oxygène, le soufre ou un groupe amino, portant comme autre radical un atome d'hydrogène, un groupe présentant de 1 à 20 atomes de carbone, de préférence un groupe alkyle ou alcoxy ramifié ou non ramifié, ou un groupe aryle.

**5.** Membrane selon la revendication 1, **caractérisée par le fait qu'**on utilise à l'étape A) un polymère choisi dans le groupe polybenzimidazole, poly(pyridine), poly(pyrimidine), polymidazole, polybenzothiazole, polybenzoxazole, polyoxadiazole, polyquinoxalines, polythiadiazole et poly(tetrazapyrène).

**6.** Membrane selon la revendication 1, **caractérisée par le fait que** le polymère utilisé à l'étape A) contient une ou plusieurs unités benzimidazoles répétées de formule

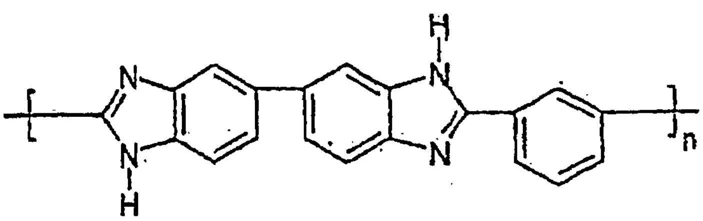

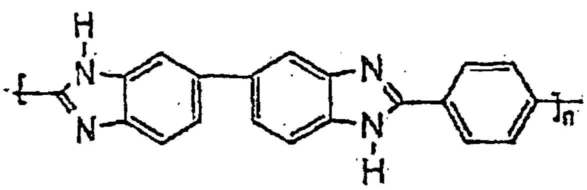

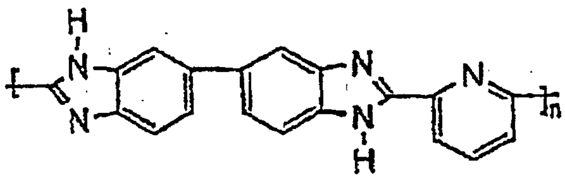

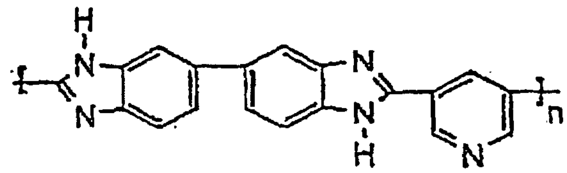

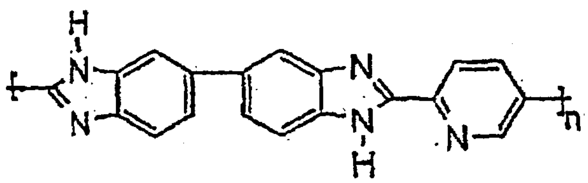

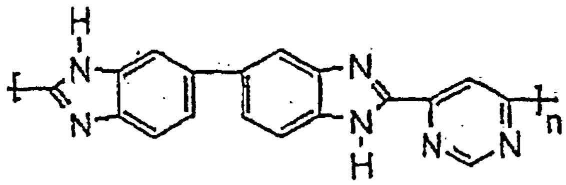

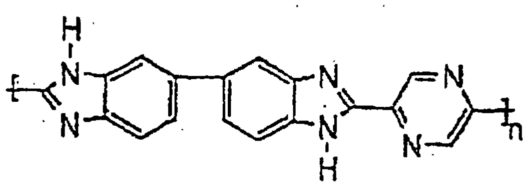

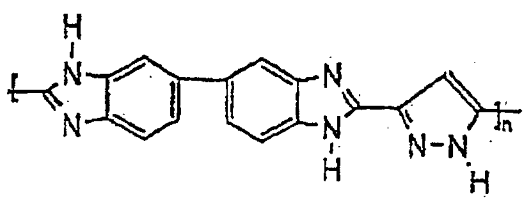

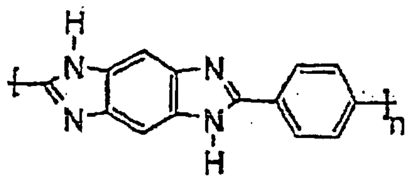

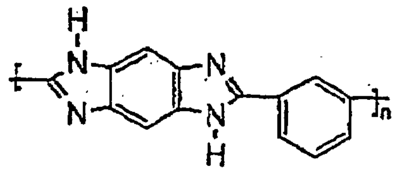

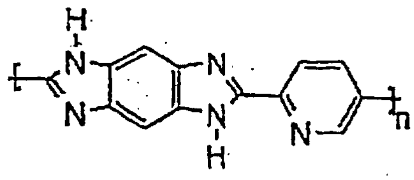

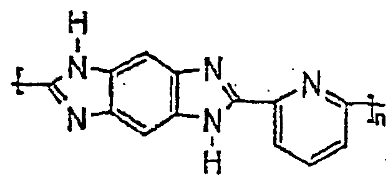

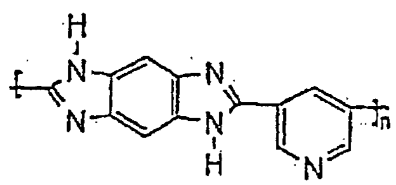

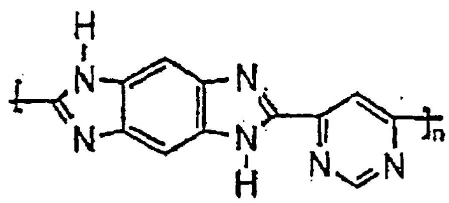

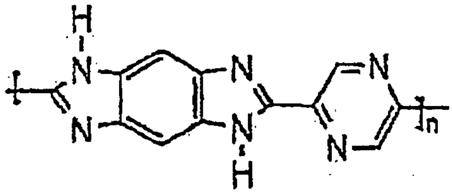

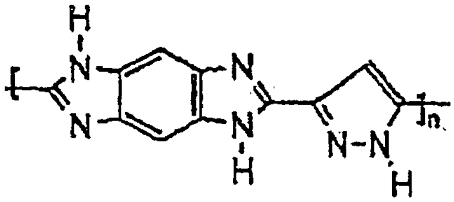

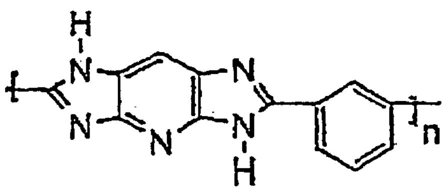

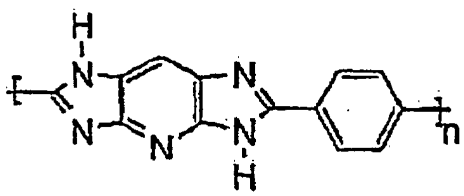

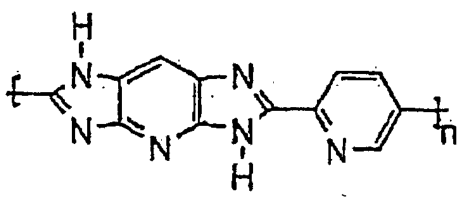

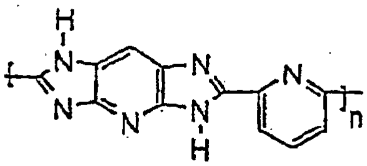

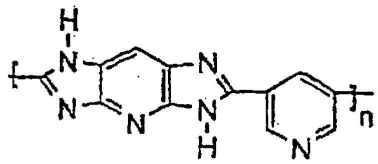

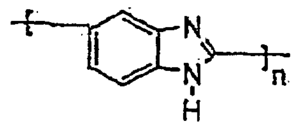

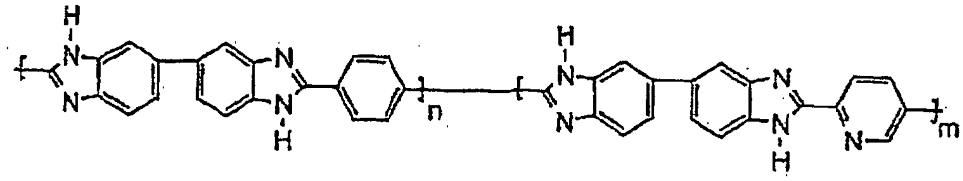

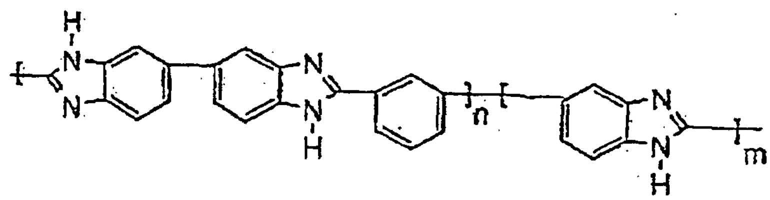

n étant un nombre entier supérieur ou égal à 10, de préférence supérieur ou égal à 100.

7. Membrane selon la revendication 1, **caractérisée par le fait qu'**après l'étape B) et avant l'étape C), la viscosité est régulée par ajout d'acide phosphorique.

8. Membrane selon la revendication 1, **caractérisée par le fait que** le traitement de la membrane à l'étape D) est effectué à des températures supérieures à 0 °C et jusqu'à une température de 150 °C, de préférence à des températures entre 10 °C et 120 °C, en particulier entre 20 °C et 90 °C, en présence d'humidité ou d'eau, d'acide phosphorique dilué et/ou de vapeur d'eau.

9. Membrane selon la revendication 1, **caractérisée par le fait que** le traitement de la membrane à l'étape D) dure de 10 secondes à 300 heures, de préférence de 1 minute à 200 heures.

10. Membrane selon la revendication 1, **caractérisée par le fait qu'**elle est réticulée après le traitement selon l'étape D) sous l'action de IR ou de NIR.

11. Membrane selon la revendication 1, **caractérisée par le fait que** la membrane formée à l'étape C) est choisie comme support d'une électrode.

12. Membrane selon la revendication 1, **caractérisée par le fait que** la membrane formée à l'étape C) possède une épaisseur comprise entre 20 et 2000 µm, de préférence entre 30 et 1500 µm, en particulier entre 50 et 1200 µm.

13. Membrane selon la revendication 1, **caractérisée par le fait que** la membrane formée à l'étape D) possède une épaisseur comprise entre 15 et 400 µm, de préférence entre 20 et 200 µm, en particulier entre 20 et 150 µm.

**14.** Membrane selon la revendication 1, **caractérisée par le fait qu'**elle présente une couche contenant un composant à action catalytique.

**15.** Electrode revêtue d'une couche de polymère conductrice de protons à base de polyazoles présentant une concentration en acide phosphorique .exprimée en mole d'acide par mole d'unités de répétition de polymère entre 12 et 20, que l'on peut obtenir par un procédé englobant les étapes suivantes :

A) Dissolution du polymère polyazole dans l'acide polyphosphorique,
B) Chauffage de la solution obtenue à l'étape A) sous atmosphère de gaz inerte à des températures jusqu'à 400 °C,
C) Application d'une couche de solution de polymère polyazole selon l'étape B) sur une électrode et
D) Traitement de la couche formée à l'étape C) à des températures supérieures à 0 °C et jusqu'à une température de 150 °C en présence d'humidité.

**16.** Electrode selon la revendication 15, le revêtement ayant une épaisseur de 2 à 300 µm, de préférence de 5 à 250 µm, en particulier de 10 à 100 µm.

**17.** Unité membrane - électrodes contenant au moins une électrode selon la revendication 15 ou 16 et au moins une membrane selon une ou plusieurs des revendications 1 à 14.

**18.** Unité membrane - électrodes contenant au moins une électrode et au moins une membrane selon une ou plusieurs des revendications 1 à 14.

**19.** Unité membrane - électrodes contenant au moins une électrode selon les revendications 15 ou 16.

**20.** Unité membrane - électrodes selon une ou plusieurs des revendications 17 à 19, **caractérisée par le fait qu'**elle contient au moins une autre membrane de polymère à base de polyazoles et/ou une membrane de mélange de polymères contenant au moins un polymère à base de polyazoles.

**21.** Pile à combustible contenant une ou plusieurs unités membrane - électrodes selon une des revendications 17 à 20.